(19)

Europäisches
Patentamt

European
Patent Office

Office européen
des brevets

(11) **EP 4 206 158 A1**

(12) **EUROPEAN PATENT APPLICATION**

(43) Date of publication:
**05.07.2023 Bulletin 2023/27**

(21) Application number: **21218314.9**

(22) Date of filing: **30.12.2021**

(51) International Patent Classification (IPC):
**C04B 28/08** (2006.01)     **C04B 28/10** (2006.01)
**C22B 3/04** (2006.01)      **C22B 7/00** (2006.01)
**C04B 111/00** (2006.01)

(52) Cooperative Patent Classification (CPC):
(C-Sets available)
**C04B 28/08; C04B 28/085; C04B 28/087;**
**C04B 28/10; C22B 3/04; C22B 7/007;**
C04B 2111/00767                               (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **VITO NV**
**2400 Mol (BE)**

(72) Inventors:
• **Nielsen, Peter**
  **2400 Mol (BE)**

• **Snellings, Ruben**
  **2400 Mol (BE)**
• **Quaghebeur, Mieke**
  **2400 Mol (BE)**
• **Srivastava, Sumit**
  **2400 Mol (BE)**
• **Cool, Pegie**
  **2000 Antwerpen (BE)**

(74) Representative: **AWA Benelux**
  **AWA Benelux SA**
  **Tour & Taxis - Royal Depot box:216**
  **Havenlaan 86c Avenue du Port**
  **1000 Bruxelles (BE)**

(54) **METHOD OF STABILIZING LEACHABLE COMPOUNDS IN A CARBONATE BONDED MATRIX**

(57)     Method of producing a carbonate bonded article, comprising preparing a reactive mixture comprising a particulate mineral source and an aqueous source, and reacting the reactive mixture with carbon dioxide to form a mineral matrix comprising carbonates. The particulate mineral source comprises a leachable compound, the leachable compound comprising one or more elements selected from: As, Ba, Cd, Cr, Co, Cu, F, Hg, Mo, Mn, Ni, Pb, Sb, Se, V and Zn. The reactive mixture comprises a reducing agent, wherein the reducing agent comprises one or more of a sulfide, disulfide and polysulfide compound that reacts with the particulate mineral source and the pH of the reactive mixture is at least 10.

FIG 2

(52) Cooperative Patent Classification (CPC): (Cont.)

C-Sets
**C04B 28/08, C04B 18/144, C04B 22/14,
C04B 40/0231;
C04B 28/085, C04B 18/141, C04B 40/0231,
C04B 2103/0096;
C04B 28/087, C04B 18/141, C04B 22/14,
C04B 40/0231;
C04B 28/10, C04B 18/141, C04B 18/145,
C04B 40/0231**

## Description

### Technical field

The present invention is related to methods of stabilizing leachates in a mineral matrix, particularly in a mineral matrix obtained by carbonation, and to articles obtained by such methods.

### Background art

Globally, several million tonnes of slags from non-ferrous metal processing are produced every year. Part thereof is used as construction materials, part is stockpiled or landfilled. When exposed to the atmosphere, dissolution of heavy metals contained in the slags may lead to significant environmental consequences, over time. Moreover, when used in construction materials, even if the leaching is below the legal limits at the time of application, thus produced construction materials can involve harmful long-term leaching behaviour.

The recycling of these slags provides a number of environmental benefits, including the preservation of natural resources and a reduction in the volume of solid waste. Further, they may be subjected to a dedicated treatment in acidic or alkaline medium to recover valuable metals therefrom.

Actual applications for these slags are for example as aggregate replacement in construction applications, e.g., as aggregate in asphalt and waterway embankment material. WO 2009/133120 describes their use in the manufacturing of construction materials using carbonation where the metal slag is caused to react with $CO_2$ at elevated pressure and temperature to form carbonates. The thus produced carbonates act as a binder cementing the slag particles together. As a result, the use of hydraulic binders, such as cementitious binders, e.g., Portland cement, can be dispensed with and the process of carbonation of metal slags enables sequestering of up to 150 g $CO_2$/kg slag.

However it has been observed that such construction products are prone to leaching of environmentally hazardous elements therefrom. Quaghebeur et al. (2015), Accelerated Carbonation of Steel Slag Compacts: Development of High-Strength Construction Materials, Front. Energy Res. 3:52, doi: 10.3389/fenrg.2015.00052 discloses a carbonation process for the production of construction materials using stainless steel slags and $CO_2$ as raw materials, without the need for any additional binder. The influence is discussed of carbonation, shaping (compaction force applied during shaping), composition and grain size of the feed, $CO_2$ pressure, and temperature on the compressive strength development of building blocks, as well as the technical and environmental quality (leaching behavior) of large building blocks produced by the accelerated carbonation process. Building blocks with a compressive strength of more than 100 MPa can be obtained. The carbonated blocks show good environmental properties. A Cr and Mo leaching to below legal limit values could be obtained by carbonation at higher temperatures above 140 °C. However, developing a low temperature carbonation process achieving acceptable strength and environmental properties still remains challenging for some materials.

Often metal slags are processed to recover valuable though hazardous metals therefrom, such as Cr, Co, Mo etc. Recovery processes can typically be based on heap leaching, alkaline pressure leaching or alkaline roasting followed by water leaching where, after selective Cr removal, the Cr-depleted matrix or slag can be used as a construction material. Although the content of these hazardous materials in the remaining metal slag may be significantly reduced, it has been observed that such processed slags and products, in particular construction products made therefrom, show significant metal leaching. Thereby, the leaching degree relative to the metal content, may be more significant than the degree of leaching shown by the metal slag as such.

US 2007/088188 describes a process for stabilizing chromium within a mineral matrix, particularly chromite ore processing residue (COPR), containing one or more alkaline components, wherein at least some of the chromium is hexavalent chromium. The alkalinity of the mineral matrix is first adjusted to a pH of less than about 10, so as to consume the one or more alkaline components of the mineral matrix, for example by addition of carbonated water, thereby producing a reaction mixture. A chemical reductant is reacted with the reaction mixture so as to reduce at least a portion of the hexavalent chromium to trivalent chromium. The chemical reductant is selected from the group of ferrous chloride, ferrous sulfate, a sulfide, a bisulfide and a polysulfide.

However, attempts to chemically stabilize the COPR matrix have been only temporarily effective in inhibiting chromate leaching to concentrations below regulatory levels, and failed in providing long term immobilisation. Factors contributing to the eventual failure of such processes include the back-conversion of trivalent chromium to hexavalent chromium, and the propensity of the COPR material to swell, thus disrupting the treated matrix.

### Summary

There is thus a need in the art to find a process with which metal leaching from a mineral matrix, such as solidified construction products made of steel slags, can be reduced to a minimum or at least to a level which is below the regulatory limit values. There is further a need in the art to provide methods and materials resulting therefrom which not only enable stabilizing leachable compounds in the mineral matrix, but also provide such mineral matrices with high compressive strength.

According to a first aspect of the present disclosure, there is therefore provided a method as set out in the appended claims. The method of the present invention for producing a carbonate bonded article comprises preparing a reactive mixture comprising a particulate mineral source and an aqueous source, and reacting the reactive mixture with carbon dioxide to form a mineral matrix comprising carbonates. The particulate mineral source comprises a leachable compound. The leachable compound can comprise one or more elements selected from: As, Ba, Cd, Cr, Co, Cu, F, Hg, Mo, Mn, Ni, Pb, Sb, Se, V and Zn, or a subset thereof. The pH of the reactive mixture is at least 10. The reactive mixture comprises a reducing agent. The reducing agent comprises one or more of a sulfide, disulfide and polysulfide compound that reacts with the particulate mineral source.

In an aspect of the present disclosure, these reducing agents have been found to assist in stabilizing and/or immobilizing the leachable compound in the mineral matrix. Advantageously, the reducing agents allow to reduce leachability of at least some of the above leaching compounds or elements. In some examples, the reducing agent contained in the reactive mixture appears capable of reducing at least some of the one or more elements of the leachable compound, to a valence which shows a decreased or even absent leaching. It was further surprisingly observed that the presence of the reducing agent allows for increasing carbon dioxide uptake during the carbonation reactions. This is an advantage as the higher carbon dioxide uptake may result in a higher compressive strength of the product thus obtained. Methods of the present disclosure therefore provide a way of improved carbon dioxide sequestration in carbonated articles.

Advantageously, the one or more sulfide, disulfide and polysulfide compounds comprise a metal, in particular K, Ca, Na, Ni, Co, Cu, Mn, Mg, Zn, Pb and/or Fe, more particularly Fe, Pb and/or Zn. Specifically, the one or more sulfide, disulfide and polysulfide compounds are sulfides, disulfides or polysulfides of Fe. Such compounds may be water soluble and hence feature an improved mobility during the carbonation reaction.

Advantageously, the particulate mineral source comprises slag from ferrous metal processing and slag from non-ferrous metal processing. The slag from non-ferrous metal processing advantageously comprises one or more of a sulfide, disulfide and polysulfide compound. By way of example, lead slag can comprise suitable amounts of sphalerite. By combining multiple of such waste or secondary material streams, there is no need to add virgin materials for the reducing agent, resulting in more economical processes.

According to a second aspect of the present disclosure, there is provided a carbonated mineral matrix as set out in the appended claims. A carbonated article as obtainable by methods of the present disclosure comprises a matrix comprising carbonates. The carbonated article has a pH of at least 10, a compressive strength of at least 5 MPa, and advantageously a total sulfur content of at least 0.5% by weight. The carbon dioxide content, expressed as total inorganic carbon is advantageously at least 5 % by weight, advantageously at least 8 % by weight. The carbonated article further comprises a leachable element selected from one or more of Cr, Mo, As, Ba, Cd, Co, Cu, Hg, Pb, Mn, Ni, Sb, Se, Sn, F, V and Zn, particularly Cr, Mo and/or Pb. The carbonated article advantageously has a leaching of the leachable element of 1.0 mg/kg or less on dry matter as determined by a batch leaching test.

### Brief description of the figures

Aspects of the invention will now be described in more detail with reference to the appended drawings, wherein same reference numerals illustrate same features and wherein:

Figure 1 represents a plot of a cumulative volumetric particle size distribution of stainless steel slag utilized in example methods of the present disclosure;
Figure 2 represents an XRD graph of FeS (iron(II)sulfide);
Figure 3 represents an XRD graph of pyrite ash.

### Detailed Description

According to an aspect of the present disclosure, methods are provided for producing an article (such as an artificial stone, e.g. for use in building and construction) by carbonation, resulting in a (mainly) carbonate bonded article. The carbonation process refers to artificial or accelerated carbonation, wherein the carbonation reactions take place in a controlled environment, under controlled parameters.

In methods according to the present disclosure, a particulate mineral source is made to react with carbon dioxide in the presence of an aqueous source, in a controlled environment, to cause the formation of carbonates. The carbonates link the particles together in a network, resulting in the formation of a cohering compound, referred to as a (carbonated) article. Methods of the present disclosure enable to form carbonates at the contact points between particles, which increases the strength of the carbonated skeleton.

The main binding phase(s) of the carbonated article is(are) constituted by carbonates that are formed during the reacting step. The particles of the particulate mineral source get mainly bonded to one another by means of the carbonate phases formed. These carbonate phase(s) contribute to great extent in the final compressive strength of the article. The article can advantageously show a uniform distribution of carbonates and possibly a high compressive strength.

The article is advantageously environment-friendly. Potentially hazardous waste materials, such as ashes and slags including leachable compounds such as heavy metals, can be used as a particulate source material, as methods of the present disclosure allow for improved immobilization of the leachable compounds in said articles. As a result, leaching of hazardous inclusions from the carbonated articles of the invention can be minimized to values in conformity with national or regional regulations.

Steps of methods according to the present disclosure will now be set out. It is to be noted that although method steps are discussed in a defined order of appearance and are identified with sequence terms as first, second, following, etc., such order need not be so and the order in which at least some of the method steps can be carried out can be altered.

In methods of the present disclosure, a reactive mixture is prepared. The reactive mixture comprises a particulate mineral source and an aqueous source. The particulate mineral source can comprise, or consist of, any mineral source capable of undergoing carbonation reactions to form a binding phase, thereby linking particles in the reactive mixture. In one aspect of the present disclosure, the particulate mineral source comprises or consists of waste or secondary raw mineral materials. The particulate mineral source can comprise or consist of slags from metallurgical processes.

Advantageously, the particulate mineral source comprises or consists of slags from ferrous metal production or processing (ferrous metallurgical slag). Specific examples of suitable ferrous metallurgical slags are granulated blast furnace slag, air cooled blast furnace slag, converter slag, basic oxygen furnace (BOF) slag, Linz-Donawitz (LD) slag, electric arc furnace (EAF) slag, ladle slag, argon-oxygen decarburization (AOD) slag, vacuum oxygen decarburization (VOD) slag, or steelmaking slag, in particular stainless steel slag. In addition, or alternatively, the particulate mineral source comprises or consists of slags from non-ferrous metal production or processing (non-ferrous metallurgical slag), such as copper (Cu), zinc (Zn) or lead (Pb) slags.

The particulate mineral source advantageously comprises or consists of a mixture of ferrous metallurgical slag and non-ferrous metallurgical slag. This advantageously allows to recycle multiple waste streams simultaneously, while improving the properties of the obtained carbonated articles as will be shown in some examples further below.

Advantageously, the reactive mixture comprises between 10% and 99.9% by dry weight of ferrous metallurgical slag, advantageously between 20% and 99.5% by dry weight, advantageously between 30% and 99% by dry weight, such as at least 50% or at least 60% by dry weight, or 98% by dry weight or less. In addition, or alternatively, the reactive mixture advantageously comprises between 0.1% and 80% by dry weight of non-ferrous metallurgical slag, advantageously between 0.5% and 70% by dry weight, advantageously between 1% and 60% by dry weight, such as between 2% and 50% by dry weight, or between 25% and 45% by dry weight.

The raw slag may be milled, crushed and/or ground and possibly subjected to a chemical treatment, which allows to split the slag in two fractions: a metal-rich fraction, which can be directly recycled to and used in the production process from which it originated and a residual and mainly mineral fraction, which is typically disposed of. The latter residual fraction is generally referred to as slag.

The particulate mineral source can comprise (or consist of) the fines of one or more types of slag from metal manufacturing and/or processing (e.g. steel slag, stainless steel slag, dephosphorization slag, desulfurization slag, slag from copper manufacturing and/or processing). Alternatively, or in addition, the particulate mineral source can comprise the fines of one or more slags from production and/or processing of nonmetals, particularly phosphorus and/or sulfur.

Slags comprising oxides of alkaline earth metals, and particularly oxides of calcium and/or magnesium are preferred for use in the particulate mineral source, since they allow for ready formation of carbonates of these alkaline earth metals.

In addition, or alternatively, the particulate mineral source can comprise one or more other waste materials. Some examples of suitable waste materials include: biomass ash, municipal solid waste incinerator (MSWI) bottom ash and fly ash. The particulate mineral source can (further) comprise construction and demolition cement waste, concrete waste and/or construction waste. The dry weight fraction of such materials in the particulate mineral source is preferably at most 30%, preferably at most 15% and preferably at most 5%.

The particulate mineral source can comprise smaller fractions of natural mineral materials, such as calcium silicate stone, olivine, wollastonite, serpentinite and sand, such as sea sand or quartz sand. The dry weight fraction of such materials in the particulate mineral source is preferably at most 20%, preferably at most 10% and preferably at most 5%.

The particulate mineral source can comprise or consist of one or more transition and/or post-transition metal compounds. The transition and/or post-transition metal compounds can be sourced from various sources, such as transition and/or post-transition metal waste filings, slags, ashes, blasting shots. The particulate mineral source can comprise hydroxides or silicates of the transition and/or post-transition metals, e.g. $Fe(OH)_2$, $Fe_2SiO_4$, $Zn(OH)_2$, $Zn_2SiO_4$.

A transition metal advantageously refers to an element belonging to groups 4 to 11 of the periodic table of elements. A post transition metal advantageously refers to the elements Zn, Cd, Hg, Ga, In, Tl, Sn, Pb, Bi. The list of transition and post transition metals (M) which can form metal carbonates of the general formula $MCO_3$ is advantageously selected from Mn, Fe, Co, Ni, Cu, Zn, Cd, and Pb.

The particulate mineral source in aspects of the present disclosure advantageously is substantially free from materials having hydraulic binding properties. A material having hydraulic binding properties can be a hydraulic binder or latent hydraulic binder or pozzolanic material. A hydraulic binder, latent hydraulic binder or pozzolanic material refers to a broad class of siliceous or siliceous and aluminous materials which, in themselves, possess little or no cementitious value but which will, in finely divided form and in the presence of water, react chemically by hydration of earth alkaline metal ions, such as calcium at ordinary temperature to form compounds possessing cementitious properties.

Advantageously, the particulate mineral source comprises or consists of a fine fraction. The fine fraction consists of all the particles of the particulate mineral source having a particle size smaller than or equal to 500 $\mu$m and thus for example consists of all the particles passing through a 500 $\mu$m sieve. The particles of the fine fraction advantageously have a particle size smaller than or equal to 200 $\mu$m (e.g. obtained by sieving with mesh size 200 $\mu$m), advantageously smaller than or equal to 125 $\mu$m (e.g. obtained by sieving with mesh size 125 $\mu$m), or smaller than or equal to 100 $\mu$m, or smaller than or equal to 80 $\mu$m.

Advantageously, at least 10% by volume of the fine fraction has a particle size smaller than or equal to 50 $\mu$m, preferably smaller than or equal to 30 $\mu$m, preferably smaller than or equal to 20 $\mu$m, preferably smaller than or equal to 10 $\mu$m. Compared to larger particles, the fine fraction can have the advantage to be more reactive towards the carbon dioxide.

Advantageously, at least 60% by volume of the fine fraction has a particle size smaller than or equal to 200 $\mu$m, preferably smaller than or equal to 150 $\mu$m, preferably smaller than or equal to 125 $\mu$m, preferably smaller than or equal to 100 $\mu$m. Advantageously, the $50^{th}$ percentile diameter (by volume) $d_{50}$, i.e. the median diameter (by volume), is smaller than or equal to 40 $\mu$m, preferably smaller than or equal to 30 $\mu$m, preferably smaller than or equal to 15 $\mu$m, preferably smaller than or equal to 12 $\mu$m, preferably smaller than or equal to 10 $\mu$m, such as between 1 $\mu$m and 10 $\mu$m. Particle size distributions by volume can be determined by laser diffraction.

It may be advantageous to utilize coarser fines as the particulate mineral source. These may show improved carbon dioxide uptake and/or greater leaching reduction of some of the leachable compounds. Advantageously, the particulate mineral source (coarser fines) has a $50^{th}$ percentile diameter (by volume) $d_{50}$, i.e. the median diameter (by volume), between 20 $\mu$m and 150 $\mu$m, advantageously between 30 $\mu$m and 125 $\mu$m, advantageously between 40 $\mu$m and 100 $\mu$m. Advantageously, the coarser fines have a $10^{th}$ percentile diameter (by volume) $d_{10}$, i.e. 90% of the particles is larger, of at least 2 $\mu$m, advantageously at least 5 $\mu$m, or at least 10 $\mu$m.

The reactive mixture comprises an aqueous source, such as water. Water can be comprised in the reactive mixture as moisture and/or as hydrates for example of the mineral source compounds. The moisture can be provided as steam or as water. Moisture refers to water present in the (compacts of) particulate mineral source, and in particular in the pores thereof. Moisture is not or weakly bound to substances of the particulate mineral source. Moisture can be determined as the water evaporated at a temperature of 105°C and atmospheric pressure. Moisture (water) can assist carbonation. The moisture can form a water film around reactive phases, which enhances the carbonation reactions, as the formation of carbonates occurs in a hydrous phase. Furthermore, moisturized particulate material is easier to shape to a predetermined form. The moisture can be adsorbed on the particles, or be present in the pores.

Hydrates comprise water which hydrates the free (reactive) oxides present in the particulate mineral source, such as the free oxides of alkaline earth metals, and CaO and MgO in particular, so as to form hydroxides (e.g. $Ca(OH)_2$ and $Mg(OH)_2$). Hydration water hence forms stronger bindings and is typically freed (evaporated) at temperatures in excess of 105°C (e.g. about 486°C and 387°C for respectively $Ca(OH)_2$ and $Mg(OH)_2$).

Not all free oxides can in general be hydrated at atmospheric conditions. In case the particulate mineral source is not fully hydrated (not all free oxides (CaO and MgO) are hydrated), part of the moisture can serve during carbonation to hydrate those oxides that are not hydrated yet and that participate in the carbonation reactions. Preferably, the particulate mineral source is hydrated to a large extent prior to carbonation. Methods of the present disclosure can comprise a pre-treatment to hydrate free oxides comprised in the particulate mineral source.

When too little moisture is present, carbonation reactions may take place under less optimal conditions. Hence, the weight fraction of water (moisture) in the reactive mixture advantageously is at least 2% by weight. On the other hand, too high moisture contents can severely limit the $CO_2$ diffusivity and reactivity. The pores of the reactive mixture therefore are advantageously not saturated with water at the beginning of the carbonation reaction. Indeed, the inflow of $CO_2$ in the pores is counteracted by the outflow of water (e.g. water produced during carbonation, or moisture present in the pores).

While the conversion of waste streams to useful materials through accelerated carbonation prevents these waste materials to be landfilled, a common challenge for these carbonated materials is to ensure their environmental quality. Some of the waste materials contain elevated concentrations of environmentally hazardous leachable inorganic compounds. As will be described, the present disclosure allows to reduce the leachability of such compounds from the carbonated articles.

Hence, the particulate mineral source, in particular originating from waste materials as the ones described above, comprises possibly hazardous leachable compounds. In the context of the present disclosure, a leachable compound refers to a compound comprising, or consisting of, one or more elements selected from: As, Ba, Cd, Cr, Co, Cu, F, Hg, Mo, Mn, Ni, Pb, Sb, Se, Sn, V and Zn. Of these, leachability of As, Cd, Cr, Co, Cu, Mo, Mn, Ni, Pb, Sb, Se and Zn may be more significant, in particular for leachable elements Cr, Mo, Pb, and/or for Co, Mn and Zn. These elements will be referred to hereinafter as leachable elements. The particulate mineral source, or the fine fraction thereof, can have a content of leachable elements of at least 250 $\mu$g/kg, possibly at least 450 $\mu$g/kg, possibly at least 550 $\mu$g/kg dry weight.

Alternatively, or in addition, the particulate mineral source or at least part of it can be subjected to a hydrometallurgical recovery process for one or more the above leachable elements, such as by alkaline treatment. In these processes, e.g. trivalent chromium ($Cr^{3+}$) is oxidized to hexavalent chromium ($Cr^{6+}$) which is leached out using a base. However, the material so treated still contains some levels of $Cr^{6+}$. The hexavalent chromium however shows a high leachability after conventional carbonation. In particular the particulate mineral source, or the fine fraction thereof, can have a content of the leachable elements between 1$\mu$g/kg and 100 $\mu$g/kg, possibly between 5 $\mu$g/kg and 50 $\mu$g/kg, possibly between 7 $\mu$g/kg and 25 $\mu$g/kg.

To address the above leachability problems, it has been found that reacting the reactive mixture in presence of sulfide, disulfide and polysulfide compounds allows to stabilize the leachable element in the carbonated mineral matrix. Surprisingly, as will be shown in the examples below, the enhanced stabilization of the leachable elements (and hence the reduced leachability) is obtained along with an increased carbon dioxide uptake in the carbonated article and/or an improved mechanical strength of the carbonated article. One possible advantage of methods of the present disclosure is that they allow to increase the amount of carbon dioxide that is sequestered by accelerated carbonation, for a same initial weight of the mineral materials.

The reactive mixture therefore comprises one or more compounds selected from the group of a sulfide compound, a disulfide compound and a polysulfide compound, all of which hereinafter generally referred to as sulfide compounds. These sulfide compounds act as a reducing agent and react with the particulate mineral source, and advantageously with the leachable compounds and may assist in stabilizing and/or immobilizing the leachable elements in the carbonated matrix. Advantageously, a reduced leaching of the leachable compounds from the carbonated matrix is obtained. Examples of suitable sulfide compounds are (poly)sulfides of one or more of the following elements: K, Ca, Na, Ni, Co, Cu, Mn, Mg, Zn, Pb and Fe. Advantageously, the sulfide compound is water soluble, which is believed to enhance the carbonation reaction by reacting with weak acids generated by dissolution of carbon dioxide in water ($CO_2$ + $H_2O$ = $CO_3^{2-}$ + $2H^+$). These acids ($H^+$) may in turn react with the sulfide compounds, producing additional carbonates (e.g. $ZnS$ + $H_2$ + $CO_3^{2-}$ = $ZnCO_3$ + $H_2S$). $H_2S$ may further react with basic particles contained in the particulate mineral source to dissolve additional mineral elements (e.g. Ca) further leading to yet additional carbonates. The sulfide compounds can comprise $H_2S$.

The sulfide compounds can originate from within the particulate mineral source. For example, lead slags may contain sulfidic minerals like sphalerite $(Zn,Fe)S$. (White) ladle furnace (LF) slag, which is also known as basic slag, reducing slag, white slag, secondary refining slag, or desulphurization slag is a byproduct from further refining of molten steel after egressing a basic oxygen furnace (BOF) or an electric arc furnace (EAF). White LF slag comprises about 3% wt. or less, typically between 1% and 2% wt. sulfide compounds (expressed in total S). Brown or grey LF slag comprises about 1% wt. sulfide compounds. In another example, the extraction of sulphur (as $SO_2$) which is converted to sulfuric acid produces a hematite-rich waste, known as roasted pyrite or pyrite ash. Pyrite ash comprises sulfide compounds (about 3% wt. (total S) or less) such as $ZnS$ and $FeS$ and hence can constitute yet an additional waste stream that can be utilized as a fraction of the particulate mineral source. Hence, by appropriate selection of the ingredient streams for the particulate mineral source, suitable amounts of sulfide compounds can be provided in the reactive mixture.

In addition or alternatively, the sulfide compound is added to the reactive mixture. Suitable examples of sulfide compounds that can be added are iron(II) sulfide (FeS), iron(II) disulfide (pyrite, $FeS_2$), PbS, ZnS and sodium polysulfide ($Na_2S_x$). Such sulfide compounds can be added to the reactive mixture as a virgin raw material, or as part of a waste stream. In some examples, $H_2S$ can be added as fraction of a $H_2S$ containing flue gas.

The amount of sulfide (disulfide, polysulfide) compounds in the reactive mixture, expressed as total sulfur content, is advantageously between 0.1 % and 15% by dry weight, advantageously between 0.25% and 12.5% by dry weight, advantageously between 0.5% and 10% by dry weight, advantageously between 0.75% and 8% by dry weight, and typically between 1% and 7% by dry weight, or even between 2% and 5% by dry weight. The amount of sulfides can be determined by XRD analysis (sulfide content), or via XRF or ICP (Inductively Coupled Plasma) analysis (by determining total S content).

The reactive mixture advantageously has a pH of at least 10 (on dry matter). These higher pH values are believed to improve conversion of carbon dioxide to carbonate ions, to enhance carbonation and hence to enhance the compressive strength of the carbonate bonded article as well as the stabilization or immobilisation of the leachable elements present in the mineral source. The pH of the solid phase can be determined by batch leaching tests, e.g. with liquid to solid ratio = 10 litre/kg dry matter (L/S = 10), 24h shaking, grain size smaller than or equal to 4 mm, conforming to EN 12457-2.

The reactive mixture can be shaped prior to carbonation reaction by any suitable shaping technique, such as agglomeration, granulation, compaction, vibration, casting, molding and extruding. One example of a shaping technique is compaction, e.g. in a press, with a compaction pressure of at least 5 MPa, preferably at least 10 MPa, or at least 15 MPa.

Preferably, at the beginning of the reacting step, the moisture content of the compact is smaller than or equal to 0.8 times the moisture saturation content, with moisture contents smaller than or equal to 0.6 times the moisture saturation content being more preferred. The moisture saturation content refers to the moisture content when all the pores are filled with moisture (water).

The reactive mixture, possibly shaped through a suitable shaping technique, is subjected to accelerated carbonation. Carbonation can be carried out in a reaction chamber, either as a batch process or as a continuous process. Carbonation is advantageously carried out at a temperature between 10°C and 200°C, preferably between 10 and 150 °C, preferably between room temperature and 125°C, such as between 20°C and 90°C, or 80°C or less. Carbonation is advantageously carried out at atmospheric pressure, or alternatively at a pressure (e.g. a gauge pressure inside the reaction chamber) of at least 0.01 MPa, advantageously at least 0.05 MPa, advantageously at least 0.1 MPa, advantageously at least 0.5 MPa, advantageously at least 1 MPa and advantageously 25 MPa or less, such as 10 MPa or less, or even 5 MPa or less. The carbonation reaction can be carried out under pure $CO_2$ gas, or with a partial $CO_2$ atmosphere, e.g. when an exhaust gas of an industrial plant, or flue gas is supplied as the reaction atmosphere in the reaction chamber. The partial $CO_2$ pressure is at least 0.025 MPa, advantageously at least 0.05 MPa, advantageously at least 0.1 MPa, advantageously at least 0.25 MPa, and advantageously 25 MPa or less, such as 10 MPa or less, or 5 MPa or less (differential pressure w.r.t. ambient). The carbonation reaction can be carried out as a continuous process, or as a batch process.

Reaction with carbon dioxide is carried out in an environment at a relative humidity of at least 75 %, preferably at least 85 %, preferably at least 90%.

The carbonation reaction is advantageously performed for at least 15 minutes, preferably at least 1 hour, preferably at least 2 hours, most preferably at least 4 hours. It can be continued for as long as 48 hours, more preferably at most 32 hours, more preferably 24 hours or less.

The carbonated articles obtained by methods of the present disclosure comprise a matrix comprising carbonate phases which binds particles or grains to one another. The binding matrix advantageously provides more than 50% of the final compression strength of the article. Other binding phases are advantageously not present, or present only in limited amounts. Therefore, the content of calcium silicate hydrate phases in the matrix binding the grains together is advantageously at most 2.2% by total weight of the article, with values of at most 1.7% by weight being preferred, values of at most 1.0% by weight being more preferred and values of at most 0.5% by weight being most preferred. The content of calcium hydrate phases is not to be considered in determining the content indicated above. Preferably, the carbonate matrix linking grains together does not comprise calcium silicate hydrate phases.

An article of the invention preferably comprises different types of alkaline earth metal carbonates. The article can comprise $CaCO_3$ as calcite, as aragonite, or both. The article can comprise magnesite ($MgCO_3$). The article can comprise ankerite ($Ca(Fe,Mg)(CO_3)_2$). An article of the invention preferably comprises mixtures of above identified elements.

The article can comprise grains (particles) of one or more alkaline earth metal silicates. Said grains are arranged (embedded) in a carbonate matrix.

Carbonated articles of the invention advantageously comprise carbonate shells surrounding grains of alkaline earth metal silicates (e.g. silicate crystals and/or other silicate phases). It is observed that after the carbonation reaction, outer zones of the silicate grains can be poor in the alkaline earth metal (e.g. Ca) due to a diffusion of said metal to a surrounding carbonate matrix. Hence, the carbonates formed by the carbonate reaction can link the original grains together to form a strong compound.

A carbonated article of the invention can further comprise one or more of the following elements: Cr, Mo, Sb, As, Ba, Cd, Co, Cu, Hg, Pb, Mn, Ni, Se, Sn, F, V and Zn. It can also further comprise Al, Ti and/or Fe. It can comprise Ba. In some examples, the article comprises Fe, Cr, Pb and/or Mo. Additionally, or alternatively, the article comprises one or more of the following elements: Ni, Zn, Mn and Al. Additionally or alternatively, the article comprises one or more of the following elements: Ba, As, and Cd. The identified elements can be comprised in the raw (granular) material (the particulate mineral source) of which the article was produced, such as stainless steel slag, phosphorus slag, or bottom ash of e.g. municipal solid waste incinerators. It is an advantageous property of an article of the invention that the leaching of one or more of the elements as indicated is at least reduced.

The article can further comprise carbonates of Fe, Mg and/or Al. The article can further comprise chromium oxide and/or magnesium chromite. The above elements can result from the carbonation of stainless steel slag.

The carbonated article can comprise anhydrous carbonates of transition and post transition metals listed in Class 14 of "New Dana Classification". In Dana's new carbonate classification, mineral carbonates of all these metals are found in Dana class 14, Anhydrous Carbonates. Of special interest is Dana type 14.01 Anhydrous Carbonates with Simple Formula A+ $CO_3$:

- The carbonates of Mn, Fe, Co, Zn, Cd, Ni belong to the Dana group 14.01.01 Calcite Group (Space Group: R3barc)

  ○ Manganese: 14.01.01.04: Rhodochrosite MnCO3
  ○ Iron (already done) : 14.01.01.03: Siderite Fe++CO3
  ○ Cobalt: 14.01.01.05: Sphaerocobaltite CoCO3
  ○ Zinc (already done): 14.01.01.06: Smithsonite ZnCO3
  ○ Cadmium: 14.01.01.07: Otavite CdCO3
  ○ Nickel: 14.01.01.08 Gaspeite NiCO3 : Hardly found in pure form in nature

- The carbonate of Pb belongs to Dana group 14.01.03 Aragonite Group (Orthorhombic: Pmcn).
  ○ Lead: 14.01.03.04 Cerussite PbCO3

The article according to the present disclosure advantageously has a compressive strength of at least 5 MPa, with a compressive strength of at least 8 MPa being preferred and a compressive strength of at least 10 MPa being particularly preferred. Advantageously, the carbonated article has a compressive strength falling in the range between 15 MPa and 100 MPa, preferably in the range between 30 MPa and 100 MPa, more preferably in the range between 45 MPa and 100 MPa. An article of the invention can have a compressive strength in the range between 50 MPa and 80 MPa. The compressive strength is advantageously proportional to the carbonate content of the article.

In carbonated articles of the present disclosure, the sulfide compounds lead to an increased carbon dioxide uptake in the carbonated article and hence an increase in carbon content. The carbon dioxide content (expressed as total inorganic carbon content - TIC) of the carbonated articles is advantageously at least 5 % by weight, advantageously between 10 % and 20 % by wt. such as between 11 % and 15 % by weight.

The total sulfur content of the carbonated article is advantageously between 0.1% and 15% by weight, advantageously between 0.25% and 12.5% by weight, advantageously between 0.5% and 10% by weight, preferably between 1% and 8% by weight or between 2% and 7% by weight.

The carbonated articles of the present disclosure advantageously show reduced leachability of one or more of the leachable elements indicated above. In particular, maximum leaching values of carbonated articles for the different leachable elements are defined in Table 1.

**Table 1:** Maximum preferred leaching values for elements comprises in the carbonated articles (ds: dry solid).

| Leachable element | Maximum leaching value (batch leaching) (mg/kg ds) | Alternative maximum leaching value (batch leaching) (mg/kg ds) |
|---|---|---|
| As | 0.8 | |
| Cd | 0.03 | |
| Cr | 2.6 | 0.5 |
| Cu | 0.8 | 0.5 |
| Hg | 0.02 | |
| Pb | 1.3 | |
| Ni | 0.75 | |
| Zn | 2.8 | |
| Sb | 1 | 0.1 |
| Ba | 20 | 1.6 |
| Co | 0.5 | 0.2 |
| Mo | 55 | 0.2 |
| Se | 2 | 0.04 |
| Sn | 1 | |

(continued)

| Leachable element | Maximum leaching value (batch leaching) (mg/kg ds) | Alternative maximum leaching value (batch leaching) (mg/kg ds) |
|---|---|---|
| V | 2.5 | 0.8 |
| F | 55 | 4.6 |

## Examples

### Materials and methods

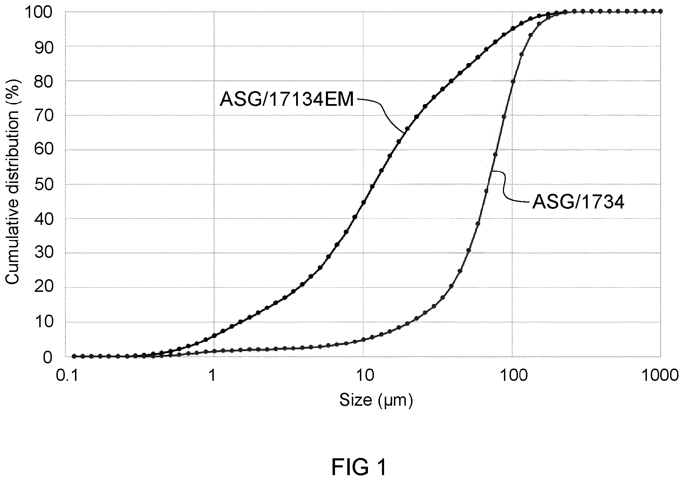

Stainless steel slag (Carbinox®) was acquired from Orbix, Belgium. This is a fine fraction comprising mainly Electric Arc Furnace (EAF) slag with mesh size 0.125 mm (i.e. 100% of the particles smaller than or equal to 0.125 mm). The particle size distribution was determined by laser diffraction using a Horiba LA-350 Laser particle size analyzer using isopropanol medium. Before the measurement, 200-400 mg slag samples were first ultrasonicated for 2 minutes in isopropanol medium, to deagglomerate lumps. For the slag as-received (batch name ASG/17134), the 50-percentile particle size $d_{50} = 69$ $\mu$m. Another batch (ASG/17134EM) of this stainless steel slag was further ground using a RETSCH planetary ball mill PM400 (Tungsten carbide) at 400 revolutions per minutes (RPM) and particle size was reduced to $d_{50} = 11$ $\mu$m. The particle size distribution parameters are listed in Table 2. The particle size distribution graph is shown in Fig. 1. Yet another batch (labelled ASG/EEM) was obtained by grinding the as-received material (ASG/17134) for about 4 hours under same conditions as above and the particles passed a 36 $\mu$m mesh sieve.

**Table 2:** Particle size distribution parameters for the particle size distributions of Fig. 1 (average of three measurements).

| Batch name : | ASG/17134 | ASG/17134EM |
|---|---|---|
| Mean size ($\mu$m) | 72 | 19 |
| Mode size ($\mu$m) | 83 | 16 |
| D(v,0.1) ($\mu$m) | 21 | 1.1 |
| D(v,0.5) ($\mu$m) | 69 | 11 |
| D(v,0.9) ($\mu$m) | 123 | 50 |

In addition, batches of the stainless steel slag was treated with chemicals to recover/remove chromium. The chromium was either recovered by (heap) leaching in 1M NaOH + 60g/L $Na_2S_2O_8$ or by roasting of the slags to oxidize trivalent Cr to hexavalent Cr, followed by water leaching and washing. For the heap leaching, the slags were granulated to improve the flow through. The chemical composition of these different batches is indicated in Table 2.

Table 3: Chemical composition by XRF bead of different samples of stainless steel slag, subjected to different pre-treatment methods.

| Batch : | | ASG/17134 | ASG/20077 | ASG/20235 | ASG/20235W |
|---|---|---|---|---|---|
| sample | unit | stainless steel slag (untreated) | after column leaching with 1M NaOH + 60g/L of $Na_2S_2O_8$ | after roasting with NaOH and water leaching | after additional washing (L/S = 10) |
| $Na_2O$ | % | <0.7 | | 9.42 | |
| MgO | % | 10.7 | | 7.35 | 3.4 |
| $Al_2O_3$ | % | 4.49 | | 3.41 | 2.1 |
| $SiO_2$ | % | 28.4 | | 20.0 | 17.9 |
| $P_2O_5$ | % | <0.1 | | <0.02 | |
| S total | | 0.23 | | 0.024 | |
| $K_2O$ | % | <0.15 | | 0.91 | <0.03 |

(continued)

| Batch : | | ASG/17134 | ASG/20077 | ASG/20235 | ASG/20235W |
|---|---|---|---|---|---|
| sample | unit | stainless steel slag (untreated) | after column leaching with 1M NaOH + 60g/L of $Na_2S_2O_8$ | after roasting with NaOH and water leaching | after additional washing (L/S = 10) |
| CaO | % | 46.0 | | 37.1 | 45.4 |
| TiO2 | % | 0.914 | | 0.79 | |
| $Cr_2O_3$ | % | 3.57 | | 0.94 | 0.33 |
| MnO | % | 1.28 | | 1.10 | 1.04 |
| $V_2O_5$ | % | 0.09 | | 0.10 | 0.047 |
| Mo | % | 0.004 | | 0.0009 | < 0.0020 |
| $Fe_2O_3$ | % | 0.87 | | 0.81 | 0.74 |
| SUM (oxide) | | 96.85 | | | |
| LOI(%) | | 2.34 | | | |

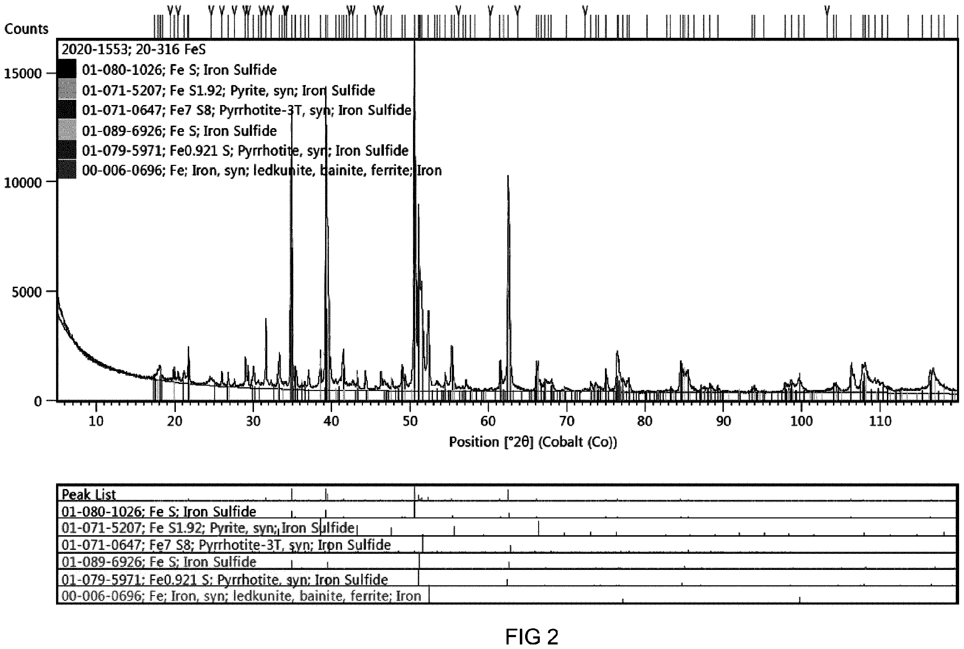

The above stainless steel slags were mixed with a sulfide compound. In the examples below, FeS, PbS and $Na_2S.xH_2O$ were used. Technical grade FeS iron(II)sulfide was bought from Alfa Aesar, having sieve residue < 13.5% +325 MESH (44 micron), CAS Number 1317-37-9. XRD data of this FeS is presented in Fig. 2. PbS lead (II)sulfide was bought from Alfa Aesar, with purity 99.9 % (metals basis) - 200 MESH, CAS Number: 1314-87-0. $Na_2S.xH_2O$ sodium sulfide hydrate was bought from sigma Aldrich, MW:78.04 (anhydrous basis) Assay: $\geq$ 60%, scales CAS number: 27610-45-3.

In addition, a slag from lead production, labelled NFMS-1 was used as source for the sulfide compound. The elemental composition of this slag was determined using Energy Dispersive X-Ray Fluorescence (ED-XRF, Spectro XEPOS HE model XEP03). For analysis, the powder samples were mixed with $Li_2B_4O_7$ flux, melted to form a bead and solidified, before the ED-XRF measurements were performed under He-atmosphere. Results are shown in Table 4. Sulfur is mainly present as PbS, ZnS, CuS and $Cu_2S$.

**Table 4:** Elemental compositions of slag NFMS-1 expressed as oxides (% by weight)

| Oxide | NFMS-1 |
|---|---|
| $Fe_2O_3$ (%) | 31.6 |
| CaO (%) | 13.8 |
| $SiO_2$ (%) | 24.8 |
| S (%) | 1.1 |
| $SO_3$ (%) | 2.8 |
| $Al_2O_3$ (%) | 6.43 |
| MgO (%) | 1.39 |
| $Cr_2O_3$ (mg/kg) | 4660 |
| MnO (mg/kg) | 4080 |
| $TiO_2$ (mg/kg) | 0.233 |

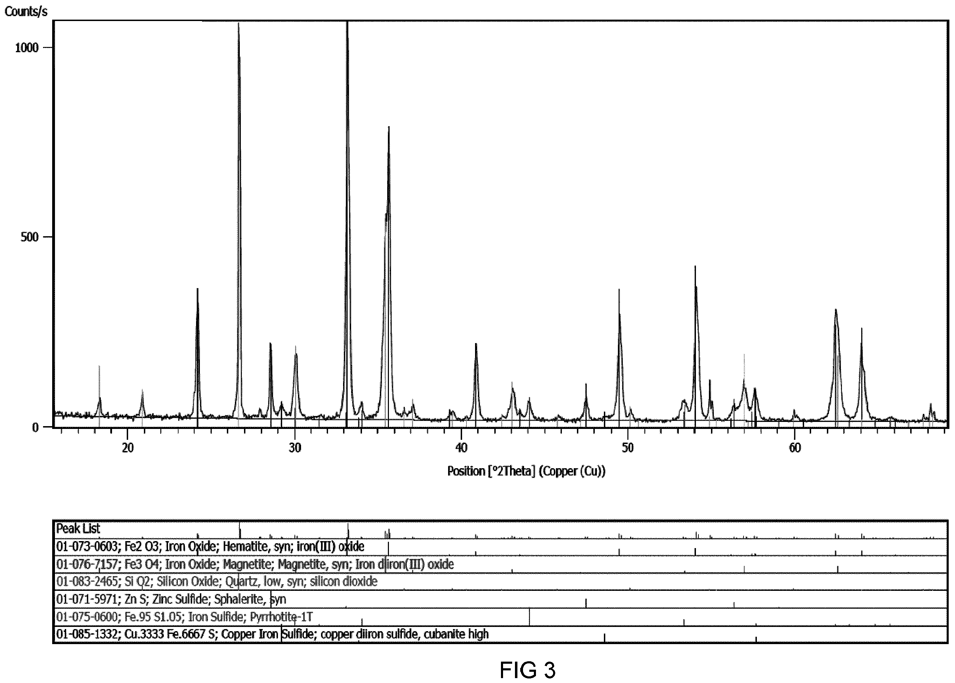

Yet additionally, pyrite ash was used as source for the sulfide compound. The XRD data of pyrite ash is shown in Fig. 3. This pyrite ash was mainly composed of hematite and magnetite, with minor phases of sphalerite (ZnS) and pyrrhotite (FeS). XRF measurements on the pyrity ash gave the composition shown in Table 5.

**Table 5:** XRF composition of pyrite ash (% by weight)

| $Fe_2O_3$ | 76-84% |
|---|---|

(continued)

| | |
|---|---|
| SiO$_2$ | 10-11% |
| ZnO | 2-4% |
| SO$_3$ | 2-4% |
| S | 0.8-1.6 % |
| Al$_2$O$_3$ | 1-2% |
| CuO | 1-2% |
| MgO | 0.1-1.0% |
| K$_2$O | 0.1-1.0% |
| CaO | 0.1-1.0% |
| BaO | 0.1-1.0% |
| P$_2$O$_5$ | 0.01-0.1% |
| TiO$_2$ | 0.01-0.1% |
| V$_2$O$_5$ | 0.01-0.1% |
| MnO | 0.01-0.1% |
| Sb$_2$O$_3$ | 0.01-0.1% |

The reactive mixtures were prepared by weighing the required amounts of slags, and homogeneously mixing them in an overhead rotating mixer for about 2 hours. Water was added to the dry mixture in an amount of liquid to solid ratio L/S = 0.10 to obtain a reactive mixture.

The reactive mixtures were shaped in a cylinder mould with 23 mm diameter by hydraulic compaction. A compaction pressure of 14.71 MPa (150 kgf/cm$^2$) was applied for 10 seconds to obtain shaped precursors with a height of 23 - 28 mm. The shaped precursors were removed from the mould and placed in an autoclave (total volume: 3.5 l). The carbonation experiments were carried out in the autoclave at 3 barg (100% CO$_2$) without prior flushing (i.e. total pressure is 4 bar and CO$_2$ concentration is about 75% (1 bar air + 3 bar CO$_2$). After adding the CO$_2$, the temperature was increased and maintained at 50°C for 16 hours. The relative humidity was kept high (> 80%) by putting a tray of water in the autoclave. After 16 hours, the carbonated blocks retrieved from the autoclave.

As a comparative experiment, air curing was performed on shaped precursors from the same batches. The air curing was carried out in a climate chamber for approximately 24 hours at 25°C and 95% relative humidity. The comparative experiments were conducted to compare the effect of the reductants with and without carbonation.

Leaching experiments were carried out following the European standard compliance test EN 12457-2. It provides information on leaching of granular wastes with a particle size below 4 mm without or with size reduction, at a liquid to solid ratio of 10 l/kg dry matter, after 24 hour in an overhead shaker (GFL 3040) which was rotated at 10 rotations per minute (RPM) for 24±0.5 h. The leaching tests were carried out in a temperature controlled room at 20±2 °C. At the end of the experiment, the eluate was immediately filtered using a disposable polypropylene syringe filter (Chromafil AO-45/25, Macherey-Nagel, pore diameter of 0.45 $\mu$m). The filtered solution was divided into two parts. One part was used to immediately measure the pH of the solutions using a Mettler Toledo Seven multi dual meter; and the other was stored for elemental analysis using ICP-AES. The leaching concentrations ($\mu$g/l) were recalculated to reflect the leaching from the solid dry material (in mg/kg).

Compressive strength was determined by loading the carbonated cylinders in an upright position at a rate of 0.5 mm/min using a 100 kN compression testing machine (Instron 5582).

Carbon dioxide uptake was determined from total carbon (TC) and total inorganic carbon (TIC) measurements. Total carbon (TC) was determined by the combustion gravimetric method. If no organic carbon is present, the combustion method to determine total carbon (TC) can be used. The test method involves burning the sample in a stream of oxygen. The CO$_2$ in the evolved gases is then collected in a suitable absorbent and its mass determined. The time of analysis is very short (10 minutes). If no organic carbon is present the total carbon (TC) content equals the total inorganic carbon (TIC) content, and the CO$_2$ content in mass% is given by equation (y):

$$CO_2 \text{ m\%} = TC \times \frac{44.01 \ (atomic \ mass \ of \ CO2)}{12.01 \ (atomic \ mass \ C)} \qquad (y)$$

If organic carbon is present, an indirect method can be used in which the TC is determined of the sample 'as is' and after dissolution of the carbonates by an acid. In this way TC and TOC (total organic carbon) are determined and the total inorganic carbon is calculated as TIC = TC-TOC. The TIC can be recalculated to $CO_2$ by equation (z):

$$CO_2 \text{ m\%} = TIC \times \frac{44.01 \ (atomic \ mass \ of \ CO2)}{12.01 \ (atomic \ mass \ C)} \qquad (z)$$

or

$$CO_2 \text{ m\%} = TC \times \frac{44.01 \ (atomic \ mass \ of \ CO2)}{12.01 \ (atomic \ mass \ C)} - TOC \frac{44.01 \ (atomic \ mass \ of \ CO2)}{12.01 \ (atomic \ mass \ C)}$$

with TC = TC determined after drying of the sample at 105°C, and TOC = TC determined after drying of the sample and dissolution of the carbonates with acid. Note that the weight of the sample before acid treatment should be used as a reference for the TOC measurement.

The pH for solid phase was determined by batch leaching tests with liquid to solid ratio = 10 litre/kg dry matter (L/S = 10), 24h shaking, after crushing to a grain size smaller than or equal to 4 mm, conforming to EN 12457-2.

**Example 1: experiments on ASG/17134 (stainless steel slag as received, 125 mm mesh) with addition of FeS in various proportions (0 - 10% by weight).**

ASG/17134 (as received stainless steel slag) was mixed with 0 - 10% wt. FeS and cured in air or by accelerated carbonation under conditions indicated above. Results are shown in Table 6.

**Table 6:** Measurements on ASG/17134 (stainless steel slag as received, 125 mm mesh) mixed with FeS in various proportions (0 - 10% by weight) - 'NT': no curing treatment.

| ASG/17134 | NT | Air curing | | | | CO₂ curing | | | |
|---|---|---|---|---|---|---|---|---|---|
| %wt. FeS | 0 | 0 | 2 | 5 | 10 | 0 | 2 | 5 | 10 |
| Compressive strength (MPa) | | 1.9 | 1.7 | 1.9 | 1.6 | 13.9 | 17.6 | 18.1 | 18.5 |
| CO₂ content (TC) % by wt. | 1.72 | 3.64 | 3.55 | 3.37 | 3.19 | 12.20 | 12.00 | 12.27 | 11.45 |
| CO₂ content (TIC) % by wt. | | 3.47 | 3.39 | 3.18 | 2.98 | 11.26 | 11.29 | 11.37 | 10.82 |
| pH (batch leach) | 12.27 | 11.50 | 11.48 | 11.51 | 11.36 | 10.39 | 10.43 | 10.28 | 10.33 |
| Cond [mS/cm] | 5.6 | 1.1 | 1.1 | 1.2 | 1.2 | 0.42 | 0.43 | 0.41 | 0.43 |
| Cr (mg/kg) | 7.0 | 8.7 | 4.2 | 1.6 | 0.7 | 1.2 | < 0.6 | < 0.5 | < 0.5 |
| V (mg/kg) | < 0.5 | < 1.0 | < 1.0 | < 1.0 | < 1.0 | 1.0 | 1.6 | < 1.0 | |
| Mo (mg/kg) | 1.65 | 1.4 | 1.3 | 1.5 | 1.4 | < 1.0 | < 1.0 | < 1.0 | < 1.0 |

It can be derived from Table 6 that compressive strength of the carbonated specimens increases with increasing proportion of FeS. Cr-leaching is significantly reduced by addition of FeS. It is also noticed that the total carbon content of the carbonated article increases by adding FeS. This is surprising as one would expect a reduction of TC and TIC due to dilution by the added FeS. Accounting for dilution due to the addition of FeS, the expected TC-based $CO_2$ content (based on the TC at 0 wt% FeS) would be 11.96 at 2 wt% FeS, 11.59 at 5 wt% FeS and 10.98 at 10 wt% FeS. The expected TIC-based $CO_2$ content (based on the TIC at 0 wt% FeS) would be 11.03 at 2 wt% FeS, 10.70 at 5 wt% FeS and 10.13 at 10 wt% FeS. Hence, the addition of FeS leads to a remarkably higher $CO_2$ uptake.

**Example 2: experiments on ASG/17134EM (milled stainless steel slag) with addition of FeS in various proportions (0 - 10% by weight).**

ASG/17134EM (milled stainless steel slag with particle size distribution as in Fig. 1) was mixed with 0 - 10% wt. FeS and cured in air or by accelerated carbonation under conditions indicated above. Results are shown in Table 7.

**Table 7:** Measurements on ASG/17134EM mixed with FeS in various proportions (0 - 10% by weight) - 'NT': no curing treatment.

| ASG/ 17134EM | NT | Air curing | | | | $CO_2$ curing | | | |
|---|---|---|---|---|---|---|---|---|---|
| %wt. FeS | 0 | 0 | 2 | 5 | 10 | 0 | 2 | 5 | 10 |
| Compressive strength (MPa) | | 1.8 | 1.37 | 1.25 | - | 57 ± 14 | 54 ± 16 | 51 ± 8 | - |
| $CO_2$ content (TC) % by wt. | 1.72 | 2.08 | - | - | - | 11.86 | 11.46 | 11.48 | - |
| pH (batch leach) | 12.32 | 12.17 | 12.12 | 12.01 | - | 10.67 | 10.67 | 10.54 | - |
| Cond [mS/cm] | 6.27 | 4.8 | 4.7 | 4.1 | - | 0.47 | 0.43 | 0.43 | - |
| Cr (mg/kg) | 6.23 | 8.5 | 3.5 | 0.75 | - | 0.97 | 0.4 | 0.29 | - |
| V (mg/kg) | - | <0.05 | <0.05 | <0.05 | - | 1.0 | 1.0 | 0.98 | - |
| Mo (mg/kg) | - | 2.0 | 2.3 | 2.5 | - | 0.70 | 0.63 | 0.56 | - |

It can be derived from Table 7 that compressive strength of the carbonated specimens is significantly higher than for the case of coarser stainless steel slag (Example 1). The $CO_2$ content determined by TC at 5 wt% FeS is higher than what would be expected when accounting for dilution (11.27%). The Cr leaching is comparable to the specimens of Example 1.

**Example 3: experiments on ASG/17134EM (milled stainless steel slag) with addition of sodium polysulfide in various proportions (0 - 10% by weight).**

ASG/17134EM (milled stainless steel slag with particle size distribution as in Fig. 1) was mixed with 0 - 10% wt. $Na_2S.xH_2O$ and cured in air or by accelerated carbonation under conditions indicated above. Results are shown in Table 8.

**Table 8:** Measurements on ASG/17134EM mixed with $Na_2S.xH_2O$ in various proportions (0 - 10% by weight) - 'NT': no curing treatment.

| ASG/17134 EM | NT | Air curing | | | | $CO_2$ curing | | | |
|---|---|---|---|---|---|---|---|---|---|
| %wt. $Na_2S.xH_2O$ | 0 | 0 | 2 | 5 | 10 | 0 | 2 | 5 | 10 |
| Compressive strength (MPa) | | 4.5 ± 0.1 | 1.3 ± 0.2 | 0.88 ± 0.01 | 0.17 | 51 ± 16 | 57 ± 1 | 61 | cracks |
| $CO_2$ content (TC)% by wt. | 1.72 | 2.48 | 2.77 | 2.57 | 2.35 | 11.92 | 12.26 | 12.42 | 9.83 |
| pH (batch leach) | 12.32 | 12.14 | 12.40 | 12.59 | 12.68 | 10.66 | 10.50 | 11.19 | 11.93 |
| Cond [mS/cm] | 6.27 | 3.8 | 8.8 | 16 | 23 | 0.63 | 1.6 | 4.7 | 11 |
| Cr (mg/kg) | 6.23 | 8.78 | 12.30 | 5.04 | 0.50 | 1.28 | 0.69 | 1.14 | 1.36 |
| Mo (mg/kg) | - | 2.44 | 4.77 | 5.84 | 5.76 | 2.00 | 4.77 | 7.07 | 6.55 |

It can be derived from Table 8 that compressive strength of the carbonated specimens is comparable to Example 2 (utilizing FeS). At 10% wt. proportion polysulfide, the carbonated specimens showed cracks. $CO_2$ uptake surprisingly increases when small amounts of polysulfide content up to about 5% wt polysulfide proportion is utilized, despite dilution effects from the addition of polysulfide. FeS however performs better in terms of leachability prevention.

**Example 4: experiments on ASG/17134EM (milled stainless steel slag) with addition of PbS in various proportions (0 - 10% by weight).**

ASG/17134EM (milled stainless steel slag with particle size distribution as in Fig. 1) was mixed with 0 - 10% wt. PbS and cured in air or by accelerated carbonation under conditions indicated above. Results are shown in Table 9.

Table 9: Measurements on ASG/17134EM mixed with PbS in various proportions (0 - 10% by weight) - 'NT': no curing treatment.

| ASG/17134 EM | NT | Air curing | | | | $CO_2$ curing | | | |
|---|---|---|---|---|---|---|---|---|---|
| %wt. PbS | 0 | 0 | 2 | 5 | 10 | 0 | 2 | 5 | 10 |
| Compressive strength (MPa) | - | 1.8 | 1.56 | 1.65 | - | $57\pm14$ | $55\pm18$ | $48\pm7$ | - |
| $CO_2$ content (TC) % by wt. | 1.72 | - | - | - | - | 11.86 | 11.74 | 11.34 | - |
| pH (batch leach) | 12.32 | 12.17 | 12.13 | 12.09 | - | 10.67 | 10.62 | 10.62 | - |
| Cond [mS/cm] | 6.27 | 4.8 | 4.3 | 3.5 | - | 0.47 | 0.60 | 0.34 | - |
| Cr (mg/kg) | 6.23 | 8.5 | 0.057 | < 0.05 | - | 0.97 | 0.41 | 0.31 | - |
| V (mg/kg) | - | <0.05 | <0.05 | <0.05 | - | 1.0 | 0.93 | 0.89 | - |
| Mo (mg/kg) | - | 2.0 | 1.8 | 1.5 | - | 0.70 | 0.79 | 0.58 | - |

It can be derived from Table 9 that compressive strength of the carbonated specimens is comparable to Examples 2 and 3 (utilizing FeS and $Na_2S.xH_2O$), which remains very high. Accounting for dilution due to the addition of FeS, the expected TC-based $CO_2$ content (based on the TC at 0 wt% PbS) would be 11.62 at 2 wt% PbS and 11.27 at 5 wt% PbS. Hence, the addition of PbS leads to a higher $CO_2$ uptake. Cr leachability is reduced with increasing PbS content, but to a lesser extent compared to air curing. PbS is less soluble and it is believed that it does not contribute to dissolution of slag minerals during carbonation.

**Example 5: experiments on ASG/20235 and ASG/20235W (roasted stainless steel slag) with addition of FeS and pyrite ash (10% by wt).**

ASG/20235 (roasted stainless steel slag to remove Cr) and ASG/20235W (washed ASG 20235) were utilized in pure form or mixed with 10% wt. pyrite ash or FeS and carbonated at 0.5 barg and 3 barg for 16 hours at 50°C. Results are shown in Table 10.

Table 10: Measurements on ASG/20235 and ASG/20235W in pure form and mixed with 10% by weight pyrite ash or FeS - 'NT': no curing treatment.

| Carbonation conditions (16 hours, 50°C) | ASG/ 20235 | ASG/ 20235 (not washed) | ASG/ 20235W (washed) L/S = 10 | ASG/ 20235W + 10% Pyrite ash | ASG/ 20235W + 10% FeS |
|---|---|---|---|---|---|
| | NT | Carbonated: 0.5 barg $CO_2$ | | | |
| pH (batch leaching) | 12.3 | 10.52 | 10.32 | 10.55 | 10.39 |
| Cr (mg/kg) | 469 | 210 | 24 | 13 | 3.6 |

(continued)

|  | NT | Carbonated: 3 barg $CO_2$ | | | |
|---|---|---|---|---|---|
| pH (batch leaching) | 12.3 | 10.77 | 10.27 | 10.72 | 10.56 |
| Cr (mg/kg) | 469 | 184 | 20 | 9.8 | 3.1 |

It can be derived from Table 10 that both FeS and pyrite ash (including sulfides like ZnS and FeS in minor proportions) allow to significantly reduce Cr leaching after carbonation compared to carbonating the pure slag.

**Example 6: experiments on ASG/EEM and NFMS-1 as sulfide compound.**

Reactive mixtures were prepared with different proportions of ASG/17134EEM and NFMS-1 and subjected to carbonation under various conditions as listed in Tables 11 and 12 below. Both Cr- leaching and Pb-leaching was determined.

Table 11: Cr leaching in mg/kg of dry solid (dm) from the different systems carbonated under different reaction conditions as determined by batch leaching (EN 12457-2) (barg: gauge pressure).

| weight proportions reaction conditions | | 0% NFMS-1 100% ASG/EEM | 33% NFMS-1 67% ASG/EEM | 67% NFMS-1 33% ASG/EEM | 100% NFMS-1 0% ASG/EEM |
|---|---|---|---|---|---|
| T (°C) | P (barg) | | | | |
| untreated | | 3.5 | | | < 0.10 |
| 30 | 1 | 1.16 | 0.18 | <0.10 | <0.10 |
| | 5 | 0.54 | 0.11 | <0.10 | <0.10 |
| | 10 | 0.80 | 0.14 | <0.10 | <0.10 |
| | 20 | 2.50 | 0.11 | <0.10 | <0.10 |
| 60 | 1 | 0.86 | 0.22 | <0.10 | <0.10 |
| | 5 | 0.54 | 0.13 | <0.10 | <0.10 |
| | 10 | 0.48 | 0.12 | <0.10 | <0.10 |
| | 20 | 0.97 | 0.14 | <0.10 | <0.10 |

Table 12: Pb leaching in mg/kg of dry solid from the different systems carbonated under different reaction conditions as determined by batch leaching (EN 12457-2).

| weight proportions reaction conditions | | 0% NFMS-1 100% ASG/EEM | 33% NFMS-1 67% ASG/EEM | 66% NFMS-1 33% ASG/EEM | 100% NFMS-1 0% ASG/EEM |
|---|---|---|---|---|---|
| T (°C) | P (barg) | | | | |
| untreated | | 0.90 | | | 175.1 |
| 30 | 1 | 0.40 | 0.28 | 0.32 | 3.4 |
| | 5 | <0.25 | 0.50 | 0.57 | 2.5 |
| | 10 | <0.25 | 0.53 | 0.29 | 2.2 |
| | 20 | 0.50 | 0.42 | 0.44 | 3.1 |
| 60 | 1 | 0.50 | 0.34 | 0.45 | 2.3 |
| | 5 | <0.25 | 0.40 | 0.56 | 3.6 |
| | 10 | <0.25 | 0.30 | 0.45 | 1.8 |
| | 20 | 0.60 | 0.37 | 0.64 | 2.5 |

When looking at Table 11, in the mixtures of ASC/17134/EEM and NFMS-1, Cr-leaching is significantly decreased to less than 0.25 mg/kg dry matter (dm) in all cases irrespective of carbonation conditions. Such concentrations are significantly lower than what would be expected by a simple decrease in the stainless steel slag proportion. The positive influence of lead slag NFMS-1 in reducing Cr-leaching from stainless steel slag in the carbonated mixes may be attributed to the synergy between sulfide oxidation (from Pb-slag NFMS-1) and Cr-reduction (from stainless steel slag).

From Table 12 it can be derived that while the Pb-leaching from non-carbonated lead slag (100% NFMS-1) was about 175 mg/kg dm, carbonation at any reaction condition leads to a significant decrease in Pb-leaching to 2-4 mg/kg dm. Compared to lead slag, Pb-leaching from non-carbonated stainless steel slag (100% ASG/EEM) is quite low (0.9 mg/kg dm). However, the beneficial effect of carbonation can also be observed in stainless steel slag, as carbonation results into Pb-leaching of <0.50 mg/kg dm in all the cases. Furthermore, while carbonation of lead-slag already resulted in significant decrease in Pb-leaching, it is even more interesting to note that the mixtures of lead slag and stainless steel slag are even better at reducing the Pb leaching in all the cases.

**Claims**

1. Method of producing a carbonate bonded article, the method comprising:

   preparing a reactive mixture comprising a particulate mineral source and an aqueous source, wherein the particulate mineral source comprises a leachable compound, the leachable compound comprising one or more elements selected from: As, Ba, Cd, Cr, Co, Cu, F, Hg, Mo, Mn, Ni, Pb, Sb, Se, V and Zn, and
   reacting the reactive mixture with carbon dioxide to form a mineral matrix comprising carbonates,
   **characterised in that** the reactive mixture comprises a reducing agent, wherein the reducing agent comprises one or more of a sulfide, disulfide and polysulfide compound that reacts with the particulate mineral source, and **in that** the pH of the reactive mixture is at least 10.

2. Method of claim 1, wherein the particulate mineral source comprises a transition metal and/or a post transition metal which reacts with the carbon dioxide to form carbonates of the transition metal and/or post transition metal.

3. Method of claim 1 or 2, wherein the particulate mineral source comprises slag from ferrous and/or non-ferrous metal processing.

4. Method of any one of the preceding claims, wherein the particulate mineral source comprises a mixture of a slag from ferrous metal processing and one or more of: a slag from non-ferrous metal processing, slag from the production of phosphorus, slag from production and/or processing of sulfur, bottom ashes and non-coal fly ashes.

5. Method of claim 4, wherein the particulate mineral source comprises between 10% and 99% by dry weight of slag from ferrous metal processing and between 1% and 90% by dry weight slag from non-ferrous metal processing.

6. Method of claim 4 or 5, wherein the one or more of a slag from non-ferrous metal processing, slag from the production and/or processing of phosphorus, slag from production and/or processing of sulphur, bottom ashes and non-coal fly ashes comprise the reducing agent.

7. Method of any one of claims 4 to 6, wherein the particulate mineral source comprises pyrite ash and/or lead slag.

8. Method of any one of the preceding claims, wherein the one or more sulfide, disulfide and polysulfide compounds comprise a metal, in particular one or more of K, Ca, Na, Ni, Co, Cu, Mn, Mg, Zn, Pb and Fe.

9. Method of any one of the preceding claims, wherein the reducing agent comprises a sulfide, disulfide or polysulfide of Fe, Pb, Cu or Zn.

10. Method of any one of the preceding claims, wherein the reactive mixture comprises between 0.1% and 15% by dry weight of the sulfide, disulfide and polysulfide compounds, preferably between 0.5% and 12% by dry weight based on total sulfur content.

11. Method of any one of the preceding claims, wherein the reactive mixture is reacted with carbon dioxide at a partial $CO_2$ pressure of at least 0.025 MPa and a temperature between 25 °C and 200 °C.

**12.** Method of any one of the preceding claims, wherein the reactive mixture is shaped prior to reacting with carbon dioxide.

**13.** Method of any one of the preceding claims, wherein the reactive mixture comprises one or more of Cr, Mo and V as the leachable compound, wherein at least a portion of the one or more of Cr, Mo and V is hexavalent.

**14.** Carbonated article obtainable by the method of any one of the preceding claims, the carbonated article comprising a matrix comprising carbonates, wherein the carbonated article has a pH of at least 10, a compressive strength of at least 5 MPa and a total sulfur content of at least 0.1% by weight, wherein the carbonated article further comprises a leachable element selected from Cr, Mo, As, Ba, Cd, Co, Cu, Hg, Pb, Mn, Ni, Sb, Se, Sn, F, V and Zn, wherein the carbonated article has a leaching of at least one of the leachable element of 1.0 mg/kg or less on dry matter as determined by a batch leaching test, preferably 0.5 mg/kg or less.

**15.** Carbonated article of claim 14, wherein the leachable element is one or more of Cr, Mo and Pb.

FIG 1

FIG 2

FIG 3

Europäisches
Patentamt

European
Patent Office

Office européen
des brevets

# EUROPEAN SEARCH REPORT

Application Number

EP 21 21 8314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2009/133120 A2 (CARBSTONE INNOVATION NV [BE]; QUAGHEBEUR MIEKE [BE] ET AL.) 5 November 2009 (2009-11-05) * claims 1-23 * * paragraph [[0193]] * * paragraph [[0200]] * * figure 7 * * table 4 * * paragraph [[0228]] * * claim 12 * * paragraph [[0115]] * | 1-15 | INV. C04B28/08 C04B28/10 C22B3/04 C22B7/00 C04B111/00 |
| Y,D | US 2007/088188 A1 (WAZNE MAHMOUD [US] ET AL) 19 April 2007 (2007-04-19) * claim 21 * * claim 2 * | 1-15 | |
| A | WO 2014/179134 A1 (NEWMONT USA LTD [US]) 6 November 2014 (2014-11-06) * the whole document * | 1-15 | |
| A | EP 2 990 393 A1 (RECOVAL BELGIUM [BE]) 2 March 2016 (2016-03-02) * the whole document * | 1-15 | TECHNICAL FIELDS SEARCHED (IPC) C04B C22B |
| A | Long Ji ET AL: "Carbon dioxide sequestration by direct mineralization of fly ash" In: "Carbon Dioxide Sequestration in Cementitious Construction Materials", 1 January 2018 (2018-01-01), Elsevier Science & Technology, GB, XP055663702, ISBN: 978-0-08-102444-7 pages 13-37, DOI: 10.1016/B978-0-08-102444-7.00002-2, * the whole document * | 1-15 | |

-/--

The present search report has been drawn up for all claims

| Place of search | Date of completion of the search | Examiner |
|---|---|---|
| The Hague | 21 June 2022 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEAN MONKMAN ET AL: "Assessing the Carbonation Behavior of Cementitious Materials", JOURNAL OF MATERIALS IN CIVIL ENGINEERING, AMERICAN SOCIETY OF CIVIL ENGINEERS, US, vol. 18, no. 6, 1 November 2006 (2006-11-01), pages 768-776, XP008100151, ISSN: 0899-1561, DOI: 10.1061/(ASCE)0899-1561(2006)18:6(768) * the whole document * ----- | 1-15 | |
| A | US 2016/272544 A1 (SAHU SADANANDA [US] ET AL) 22 September 2016 (2016-09-22) * the whole document * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 21 June 2022 | Martinez Miró, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 21 8314

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2022

| Patent document cited in search report | Publication date | Patent family member(s) | Publication date |
|---|---|---|---|
| WO 2009133120 A2 | 05-11-2009 | AU 2009242105 A1 | 05-11-2009 |
| | | BR PI0907654 A2 | 19-07-2016 |
| | | CA 2722724 A1 | 05-11-2009 |
| | | CN 102083771 A | 01-06-2011 |
| | | DK 2276714 T3 | 25-06-2018 |
| | | EP 2276714 A2 | 26-01-2011 |
| | | ES 2674364 T3 | 29-06-2018 |
| | | HR P20180891 T1 | 10-08-2018 |
| | | HU E037784 T2 | 28-09-2018 |
| | | LT 2276714 T | 10-07-2018 |
| | | PL 2276714 T3 | 28-09-2018 |
| | | PT 2276714 T | 25-06-2018 |
| | | RU 2010143734 A | 10-06-2012 |
| | | SI 2276714 T1 | 31-08-2018 |
| | | TR 201807932 T4 | 21-06-2018 |
| | | UA 101366 C2 | 25-03-2013 |
| | | US 2011165400 A1 | 07-07-2011 |
| | | WO 2009132692 A1 | 05-11-2009 |
| | | WO 2009133120 A2 | 05-11-2009 |
| US 2007088188 A1 | 19-04-2007 | US 2007088188 A1 | 19-04-2007 |
| | | WO 2006105536 A2 | 05-10-2006 |
| WO 2014179134 A1 | 06-11-2014 | AU 2014260247 A1 | 12-11-2015 |
| | | BR 112015027415 B1 | 09-02-2021 |
| | | CA 2911147 A1 | 06-11-2014 |
| | | CL 2015003164 A1 | 17-06-2016 |
| | | PE 20160021 A1 | 21-01-2016 |
| | | US 2016074872 A1 | 17-03-2016 |
| | | WO 2014179134 A1 | 06-11-2014 |
| EP 2990393 A1 | 02-03-2016 | AU 2015308347 A1 | 30-03-2017 |
| | | BE 1022349 B1 | 25-03-2016 |
| | | BR 112017003494 A2 | 05-12-2017 |
| | | CA 2958707 A1 | 03-03-2016 |
| | | CN 106795053 A | 31-05-2017 |
| | | DK 3186210 T3 | 15-04-2019 |
| | | EP 2990393 A1 | 02-03-2016 |
| | | EP 3186210 A1 | 05-07-2017 |
| | | ES 2716934 T3 | 18-06-2019 |
| | | HR P20190462 T1 | 19-04-2019 |
| | | HU E042045 T2 | 28-06-2019 |
| | | LT 3186210 T | 10-04-2019 |
| | | MA 40544 B1 | 31-05-2019 |
| | | PL 3186210 T3 | 28-06-2019 |
| | | PT 3186210 T | 01-04-2019 |

EPO FORM P0459

For more details about this annex : see Official Journal of the European Patent Office, No. 12/82

**page 1 of 2**

## ANNEX TO THE EUROPEAN SEARCH REPORT
## ON EUROPEAN PATENT APPLICATION NO.

EP 21 21 8314

This annex lists the patent family members relating to the patent documents cited in  the above-mentioned European search report.
The members are as contained in the European Patent Office EDP file on
The European Patent Office is in no way liable for these particulars which are merely given for the purpose of information.

21-06-2022

| Patent document cited in search report | Publication date | Patent family member(s) | Publication date |
|---|---|---|---|
| | | RU    2017107496 A | 07-09-2018 |
| | | SI       3186210 T1 | 31-05-2019 |
| | | TR     201903737 T4 | 22-04-2019 |
| | | UA       120187 C2 | 25-10-2019 |
| | | US    2017241871 A1 | 24-08-2017 |
| | | WO    2016030531 A1 | 03-03-2016 |
| US 2016272544    A1 | 22-09-2016 | BR 112017020150 A2 | 29-05-2018 |
| | | BR 112017020153 A2 | 05-06-2018 |
| | | CA       2980011 A1 | 29-09-2016 |
| | | CA       2980014 A1 | 29-09-2016 |
| | | CN     108137410 A | 08-06-2018 |
| | | CN     108207111 A | 26-06-2018 |
| | | EA     201791878 A1 | 30-04-2018 |
| | | EA     201791879 A1 | 30-04-2018 |
| | | EP       3271309 A1 | 24-01-2018 |
| | | EP       3271311 A1 | 24-01-2018 |
| | | JP       6929828 B2 | 01-09-2021 |
| | | JP       7019557 B2 | 15-02-2022 |
| | | JP     2018508459 A | 29-03-2018 |
| | | JP     2018508460 A | 29-03-2018 |
| | | JP     2021098653 A | 01-07-2021 |
| | | JP     2022031657 A | 22-02-2022 |
| | | TW     201700433 A | 01-01-2017 |
| | | TW     201708157 A | 01-03-2017 |
| | | US    2016272544 A1 | 22-09-2016 |
| | | US    2016272545 A1 | 22-09-2016 |
| | | US    2018186696 A1 | 05-07-2018 |
| | | WO    2016154021 A1 | 29-09-2016 |
| | | WO    2016154024 A1 | 29-09-2016 |

EPO FORM P0459

For more details about this annex : see Official Journal of the European Patent Office, No. 12/82

page 2 of 2

**EP 4 206 158 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009133120 A

- US 2007088188 A

### Non-patent literature cited in the description

- **QUAGHEBEUR et al.** Accelerated Carbonation of Steel Slag Compacts: Development of High-Strength Construction Materials. *Front. Energy Res.,* 2015, vol. 3, 52

- *CHEMICAL ABSTRACTS,* 1317-37-9
- *CHEMICAL ABSTRACTS,* 1314-87-0
- *CHEMICAL ABSTRACTS,* 27610-45-3